# EUROPEAN PATENT APPLICATION

(11) **EP 4 721 850 A1**
(43) Date of publication of application: **08.04.2026**
(21) Application number: 24204168.9
(22) Date of filing: 02.10.2024
(51) Int. Cl.: B01J 4/00, C08F 2/01

(54) **SYSTEM AND PROCESS FOR PREPARING A FEED STREAM FOR A SOLUTION POLYMERIZATION PROCESS**

(71) Applicant: Borealis GmbH, 1020 Vienna (AT)
(72) Inventor: BERGSTRA, Michiel, 3583 Beringen (BE); SLEIJSTER, Henry, 6161 Sittard Geleen (NL); ERIKSSON, Erik, 444 86 Stenungsund (SE); HAHNRATHS, Joseph Anna Jacob, 6161 Geleen (NL); ZITTING, Samuli, 06850 Kulloo (FI)
(74) Representative: Maiwald GmbH

(57) **Abstract**

A system for preparing a feed stream for introduction into a solution polymerization reactor, the system comprising a pressurizing unit comprising an outlet, a cooling unit comprising an inlet and an outlet, a heating unit comprising an inlet and an outlet, the solution polymerization reactor comprising an inlet, a first feeding line fluidly connecting the outlet of the pressurizing unit with the inlet of the solution polymerization reactor, a first deviation means fluidly connecting the first feeding line with a first cooling line, a first rejoining means fluidly connecting a second cooling line with the first feeding line, a second deviation means fluidly connecting the first feeding line with a first heating line, and a second rejoining means fluidly connecting a second heating line with the first feeding line, wherein the first cooling line is fluidly connected with the inlet of the cooling unit, wherein the second cooling line is fluidly connected with the outlet of the cooling unit, wherein the first heating line is fluidly connected with the inlet of the heating unit, wherein the second heating line is fluidly connected with the outlet of the heating unit, and wherein the first rejoining means is positioned in the feeding line downstream of the second deviation means.

## Description

### Technical Field of the Invention

The present invention is concerned with a system and process for preparing a feed stream for a solution polymerization process, in particular for a system and process for preparing a feed stream for a solution polymerization process comprising a heating section/step and a cooling section/step.

### Background of the Invention

In solution polymerization technology, the use of a start-up heater is a common measure if the process conditions are chosen to be above the melting temperature of the polymer. For such processes and systems, the reaction conditions must already be met at start-up (i.e. if the melting temperature is higher than 130 °C). Hence, usually, start-up heaters are used in feed preparation systems and processes known from the prior art.

Other processes use deep-cooling sections for cooling the reactor feed to low temperatures such as -30 °C before entering the reactor. Such operational mode has the advantage that higher polymer concentrations can be used in the process.

WO 2009/013217 A1 generally discloses a process for preparing an alpha-olefin feed stream. This process comprises pressurizing the feed stream, adding monomer, comonomer, and hydrogen.

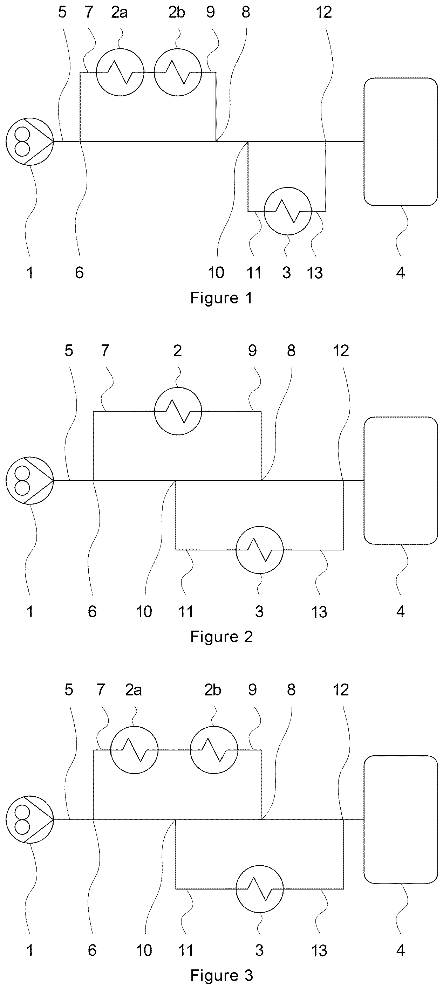

Usually, the layout of a system or process for preparing a reactor feed, which include both a cooling section and a heating section have a layout as shown in Figure 1. Thereby, each section, i.e. the cooling section and the heating section, has its own dedicated bypass possibility. During start-up of the reaction only the start-up heater is used. When reaction heat is generated and the reactor temperature is increasing, the start-up heater is slowly taken out of operation until the complete flow to the reactor is by-passing the start-up heater, whereby the start-up heater is taken out of service. As a second step in the start-up procedure of the system as known from the prior art, the cooling section is slowly taken into service. During normal, continuous operation only the cooling section is used, and the bypass line of the cooling section is taken out of service.

### Summary of the Invention

The systems and processes known from the prior art have the disadvantage that the start-up heater cannot be fed with cold reactor feed from the cooling section due to safety scenarios of a thermo-shock.

As a further disadvantage, in case the polymerization process has to be shut down immediately, the only possibility to remove the cold reactor feed without the risk of a thermo-shock is to drain it off to recovery feed/flare vessels thereby creating troublesome operations with a lot of flaring of mainly the monomer, i.e. ethylene. This draining is also taking typically about 24 h before the plant can be prepared for a new start-up attempt.

Hence, it is one object of the present invention to provide a system and process for preparing a feed stream for a solution polymerization process, which can be immediately shutdown without unnecessarily flaring monomer. Moreover, it is in particular an object of the present invention to prevent flaring by re-processing the monomer via a return flow back to the cracker or to other users preventing flaring.

It is further an object of the present invention to provide a system and process for preparing a feed stream for a solution polymerization process with reduced risk of thermo-shock.

Finally, it is an object of the present invention to provide a system and process for preparing a feed stream for a solution polymerization process which requires significantly less time for a new restart attempt than the systems and processes used in the prior art.

It has been surprisingly found that above-mentioned objects can be achieved by a system for preparing a feed stream for introduction into a solution polymerization reactor, the system comprising
- a pressurizing unit comprising an outlet,
- a cooling unit comprising an inlet and an outlet,
- a heating unit comprising an inlet and an outlet,
- the solution polymerization reactor comprising an inlet,
- a first feeding line fluidly connecting the outlet of the pressurizing unit with the inlet of the solution polymerization reactor,
- a first deviation means fluidly connecting the first feeding line with a first cooling line,
- a first rejoining means fluidly connecting a second cooling line with the first feeding line,
- a second deviation means fluidly connecting the first feeding line with a first heating line, and
- a second rejoining means fluidly connecting a second heating line with the first feeding line,
   wherein the first cooling line is fluidly connected with the inlet of the cooling unit,
   wherein the second cooling line is fluidly connected with the outlet of the cooling unit,
   wherein the first heating line is fluidly connected with the inlet of the heating unit,
   wherein the second heating line is fluidly connected with the outlet of the heating unit, and
   wherein the first rejoining means is positioned in the feeding line downstream of the second deviation means.
   It has been further surprisingly found that above-mentioned objects can be achieved by a process for preparing a feed stream for introduction into a solution polymerization reactor using a system according to the present invention, the process comprising the steps of
- providing in a *feed composition step* a composition stream, wherein the composition stream comprises a solvent, a monomer, optionally hydrogen and preferably further comonomer,
- pressurizing in *feed pressurizing step* said composition using the pressurizing unit yielding a pressurized composition stream in the feeding line,
- heating in a *startup feed heating step* the pressurized composition stream by adjusting the first deviation means and the second deviation means to allow flow of at least a part of the pressurized composition stream, preferably the total pressurized composition stream, via the first heating line through the heating unit and via the second heating line and the second rejoining device to reactor until the reactor reached a startup temperature, and
- cooling in a production feed cooling step the pressurized composition stream by adjusting the first deviation means to allow flow of at least a part of the pressurized composition stream, preferably the total pressurized composition stream, via the first cooling line through the cooling unit and via the second cooling line, the first rejoining device to reactor until thereby polymerizing the monomer, preferably together with the comonomer, to yield a polymer.

The system and process of the present invention gives the possibility to process the cold reactor feed after immediate shutdown of the regular process in a shorter time than with the existing layout. Furthermore, it opens the possibility for re-processing the monomer without additional flaring by going via the regular vent outlet of the process (to boilers or back to the cracker or other reprocessing units).

Furthermore, the cooling section can be placed closer to the reactor thereby improving the response time between the change of the cooling and effects observed in the reactor.

In the system and process according to the present invention, the start-up heater is intrinsically protected from thermo-shock.

In an immediate shutdown situation, the start-up heater is taken into operation again using low flow rates and will first introduce the contents of the common by-pass line in the reactor under the proviso that the reactor temperature is maintained (i.e. more than 150 °C). Subsequently, the cold monomer feed remaining in the cooling section is slowly mixed in, heated by the stream from the heater and introduced in the reactor. The reactor feed will travel via the reactor, will be additionally heated, and can be evaporated in a flashing step after the reactor.

### Short Description of the Figures

- Figure 1: shows a system for preparing a feed stream for introduction into a solution polymerization reactor according to the prior art.
- Figure 2: shows the most general embodiment of a system according to the present invention.
- Figure 3: shows an embodiment of the system according to the present invention comprising two coolers and the second rejoining means close to the reactor.
- Figure 4: shows an embodiment of the system according to the present invention comprising one cooler, the second rejoining means farther away from the reactor than in the embodiment of Figure 3, and an additional reactor feed withdrawal line connected to the feeding line downstream the second rejoining means.
- Figure 5: shows an embodiment of the system according to the present invention comprising one cooler, the second rejoining means farther away from the reactor than in the embodiment of Figure 3, and an additional hot solvent feeding line connected to the feeding line downstream the second rejoining means.
- Figure 6: shows an embodiment of the system according to the present invention comprising one cooler and additional lines for adding monomer, comonomer, and/or hydrogen.
- Figure 7: shows an embodiment of the system according to the present invention wherein the deviation means, and rejoining means are at the same position.
- Figure 8: shows an embodiment of the system according to Figure 7 without a by-pass line.

### List of reference signs

- **1**: Pressurizing unit
- **2**: Cooling unit
- **2a**: First cooling device
- **2b**: Second cooling device
- **3**: Heating unit
- **3a**: Heating device
- **4**: Solution polymerization reactor
- **5**: Feeding line
- **6**: First deviation means
- **7**: First cooling line
- **8**: First rejoining means
- **9**: Second cooling line
- **10**: Second deviation means
- **11**: First heating line
- **12**: Second rejoining means
- **13**: Second heating line
- **14**: Hot solvent feeding line
- **15**: Reactor feed withdrawal line
- **16**: Monomer feeding line
- **17**: Co-monomer feeding line
- **18**: Hydrogen feeding line
- **19**: Third cooling device

### Definitions

The term *'solution polymerization'* as used herein denotes a process in which monomers and optionally comonomers, such as olefins, are dissolved in a solvent and polymerized to form polymers. In solution olefin polymerization, the olefin monomers like ethylene or propylene are polymerized in a solvent, often under elevated temperatures and pressures. The solvent keeps the polymer in solution within a certain viscosity range. Hence, the reactants can be efficiently intermixed to enable heat transfer (convection) and mass transfer of reactants to the catalyst. In particular the heat transfer allows for efficient control of the reaction temperature. Catalysts, such as Ziegler-Natta or metallocenes, are typically dissolved or suspended in the same solvent and play a crucial role in controlling the molecular weight and polymer architecture. The resulting polymer remains dissolved in the solvent during the reaction, forming a homogeneous solution. After polymerization, the polymer is separated from the solvent through precipitation, distillation, or evaporation. This method allows for the production of high-molecular-weight polymers with controlled properties.

The term *'fluidly connected'* as used herein denotes a configuration in which two or more components, devices, or systems are arranged such that a fluid, such as a liquid, a gas, or a slurry, preferably a liquid, can flow or be transferred between them. This connection may include direct pathways like pipes, tubes, or channels, and may involve intervening elements such as valves, pumps, or filters, provided they do not obstruct the intended fluid communication. The term does not necessarily require a continuous or uninterrupted physical connection, but rather emphasizes the capability of fluid flow between the connected components.

*'Flash separators'* have been known in the prior art for decades (also as low- pressure separators). As it is well known in the art, a liquid feed is passed to a flash vessel operated at a reduced pressure. Thereby a part of the liquid phase vaporizes and can be withdrawn as an overhead stream (or a vapor stream) from the low-pressure separator. The part remaining in liquid phase is then withdrawn as a bottom stream or a liquid stream from the flash vessel. Operating the low-pressure separator under conditions such that both vapor and liquid phases are present in the flash vessel describes this situation.

The term *'flash separating system unit'* as used herein denotes a system unit, which comprises at least one flash separator, but also means for condensing the stream received by the flash separating system unit before feeding it to the at least one flash separator.

### Detailed Description of the Invention

In the following the system and the process according to the present invention are described in more detail.

### System according to the Invention

As set out above, the most general embodiment of the system according to the present invention is a system for preparing a feed stream for introduction into a solution polymerization reactor, the system comprising
- a pressurizing unit **(1)** comprising an outlet,
- a cooling unit **(2)** comprising an inlet and an outlet,
- a heating unit **(3)** comprising an inlet and an outlet,
- the solution polymerization reactor **(4)** comprising an inlet,
- a first feeding line **(5)** fluidly connecting the outlet of the pressurizing unit **(1)** with the inlet of the solution polymerization reactor **(4),**
- a first deviation means **(6)** fluidly connecting the first feeding line **(5)** with a first cooling line **(7),**
- a first rejoining means **(8)** fluidly connecting a second cooling line **(9)** with the first feeding line **(5),**
- a second deviation means **(10)** fluidly connecting the first feeding line **(5)** with a first heating line **(11),** and
- a second rejoining means **(12)** fluidly connecting a second heating line **(13)** with the first feeding line **(5),**

wherein the first cooling line **(7)** is fluidly connected with the inlet of the cooling unit **(2),**
wherein the second cooling line **(9)** is fluidly connected with the outlet of the cooling unit **(2),**
wherein the first heating line **(11)** is fluidly connected with the inlet of the heating unit **(3),**
wherein the second heating line **(13)** is fluidly connected with the outlet of the heating unit **(3),** and
wherein the first rejoining means **(8)** is positioned in the feeding line **(5)** downstream of the second deviation means **(10).** Such a general system is shown in Figure 2.

Typically, the reactor feed is introduced into a deep-cooling unit **(2)** after passing the pressurizing unit **(1).** This deep-cooling unit typically is able to cool the reactor feed to sub-zero temperatures. Preferably the deep-cooling unit comprises two coolers, which are able to cool the reactor feed to about -30 to -40 °C.

Hence, preferably, the cooling unit **(2)** comprises, more preferably consists of, at least two cooling devices, preferably connected in series. More precisely, preferably, the cooling unit **(2)** comprises
- a first cooling device **(2a)** comprising an inlet and an outlet, and
- a second cooling device **(2b)** comprising an inlet and an outlet,

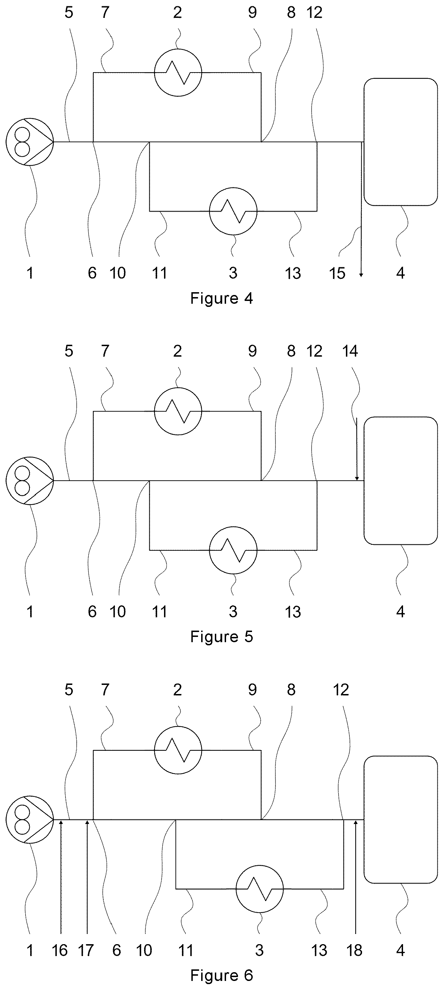

wherein the outlet of the first cooling device **(2a)** is fluidly connected to the inlet of the second cooling device **(2b),**
wherein the inlet of the first cooling device **(2a)** is the inlet of the cooling unit **(2),** and
wherein the outlet of the second cooling device **(2b)** is the outlet of the cooling unit **(2).** This serial setup of coolers enables an efficient way of cooling the pressurized reactor feed to sub-zero temperatures as mentioned in the range of -30 to -40 °C. Such a system is depicted in Figures 3 to 8, wherein the one cooling device could be replaced by two cooling devices in Figures 4-6.

Optionally, the system may further comprise a third cooling device **(19)** downstream of the pressurizing unit **(1)** and upstream of deviation means **(6).** Such a cooling device can be used for pre-cooling the feeding stream. This third cooling device **(19)** is preferably operated on the utility side with cooling water.

The heating unit **(3)** is usually located close, preferably less than 5 m of connecting line to the reactor inlet. The heating unit **(3)** can comprise more than one heating device, i.e. two heating devices. Preferably, the heating unit **(3)** comprises only one heating device **(3a).** This heating device **(3a)** is preferably operated with medium pressure steam to heat the reactor feed to a temperature of more than 150 °C.

A system for preparing a feed stream for a solution polymerization has also been described in Patent application EP 4 000 723 A1, particularly as shown in Figure 6 therein. This system shows a pump and a heat exchanger in the feeding line to the reactor. Furthermore, the system shows a feed vessel located upstream of the pump. In this feed vessel, a first part of the reactor feed is premixed, wherein further monomer, comonomer, and/or hydrogen is added along the feeding line.

Hence, a first monomer feeding line **(16)** for feeding monomer is preferably fluidly connected to the first feeding line **(5)** upstream of the first deviation means **(6)** and downstream of the outlet of the pressurizing unit **(1).**

Accordingly, preferably, a first comonomer feeding line **(17)** for feeding comonomer is fluidly connected to the first feeding line **(5)** upstream of the first deviation means **(6)** and downstream of the outlet of the pressurizing unit **(1).** More preferably, the first comonomer feeding line **(17)** for feeding comonomer is fluidly connected to the first feeding line **(5)** downstream of the position of the fluid connection of the first monomer feeding line **(16)** with the first feeding line **(5).** It should be noted that not each copolymerization process requires adding comonomer at this stage. Other feeding locations could be upstream, i.e. in the feed vessel.

A first hydrogen feeding line **(18)** for feeding hydrogen is preferably fluidly connected to the first feeding line **(5)** downstream of the first rejoining means **(8)** and upstream of the inlet of the solution polymerization reactor **(4)** (cf. Figure 6). Alternatively, the first hydrogen feeding line **(18)** for feeding hydrogen is preferably fluidly connected to the first feeding line **(5)** downstream of the position of the fluid connection of the first monomer feeding line **(16)** with the first feeding line **(5)** and/or downstream of the position of the fluid connection of the first comonomer feeding line **(17)** with the first feeding line **(5)** and upstream of the first deviation means **(6)** (not shown in the Figures). Further alternatively, the first hydrogen feeding line **(18)** for feeding hydrogen is preferably fluidly connected to the first feeding line **(5)** downstream of the first rejoining means **(8)** and upstream of the second rejoining means **(12)** (not shown in the Figures).

Hydrogen is preferably fed just before or just after the deep-cooling unit. Reason is that it is expected that a proper dissolving is needed to have a well-defined feed to the reactor. This position ensures that a longer dissolution time follows after the hydrogen feed. Hence, most preferably, the first hydrogen feeding line **(18)** for feeding hydrogen is a) fluidly connected to the first feeding line **(5)** downstream of the position of the fluid connection of the first monomer feeding line **(16)** with the first feeding line **(5)** and/or downstream of the position of the fluid connection of the first comonomer feeding line **(17)** with the first feeding line **(5)** and upstream of the first deviation means **(6)** or b) fluidly connected to the first feeding line **(5)** downstream of the first rejoining means **(8)** and upstream of the second rejoining means **(12).**

Furthermore, preferably, the pressurizing unit (1) is a pump, more preferably a reactor feed pump. The inlet of this pump is preferably connected to an outlet of a prior feed preparation unit positioned upstream of the pressurizing unit (1), preferably a feed vessel suitable for preparing a pre-mixed reactor feed stream.

Generally, the first deviation means **(6),** and second deviation means **(10)** can be any device suitable for deviating or dividing a stream. Preferably, the first deviation means **(6)** and second deviation means **(10)** are further suitable to partially or fully closing one stream connected thereto in both directions. Hence, most preferably, the first deviation means **(6),** and/or the second deviation means **(10)** are selected from flow control valves, more preferably automatic control valves, and pump assisted splitters.

Likewise, the first rejoining means **(8),** and/or the second rejoining means **(12)** are suitable for fully or partially fluidly connecting two, preferably three streams. Most preferably, the first rejoining means **(8),** and/or the second rejoining means **(12)** are selected from manifolds, flow dividers, mixers, diffusors, and splitters.

Accordingly, the first deviation means **(6)** is preferably positioned in the feeding line **(5)** at the same position as the second deviation means **(10)** or upstream of the second deviation means **(10).** More preferably, the first deviation means **(6)** is positioned in the feeding line **(5)** at the same position as the second deviation means **(10).** Most preferably, the first deviation means **(6)** and the second deviation means **(10)** are identical.

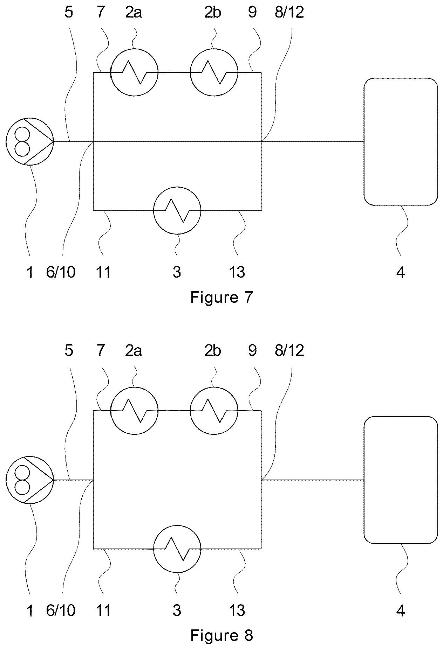

In a preferred embodiment of the present invention according to Figure 7, the first rejoining means **(8)** is positioned in the feeding line **(5)** at the same position as or upstream of the second rejoining means **(12).** More preferably, the first rejoining means **(8)** is positioned in the feeding line **(5)** at the same position as the second rejoining means **(12).** Most preferably, the first rejoining means **(8)** and the second rejoining means **(12)** are identical.

In a most preferred embodiment, the first deviation means **(6)** is positioned in the feeding line **(5)** at the same position as the second deviation means **(10)** and/or the first rejoining means **(8)** is positioned in the feeding line **(5)** at the same position as the second rejoining means **(12).** Even more preferably, the first rejoining means **(8)** and the second rejoining means **(12)** are identical and/or the first deviation means **(6)** and the second deviation means **(10)** are identical.

The advantage of such system is that only one deviation means and only one rejoining means is necessary, reducing parts, material, costs, and complexity of the system.

Even more preferably, in a preferred embodiment of the present invention according to Figure 8, the feeding line **(5)** is interrupted in a system according to Figure 7 between the position of the first deviation means **(6)** or the second deviation means **(10)** and the position of the first rejoining means **(8)** or the second rejoining means **(12).** This even more reduces parts, material, costs, and complexity.

In another preferred embodiment of the present invention as depicted in Figure 5, the system further comprises a hot solvent feeding line **(14)** fluidly connected to the feeding line **(5)** downstream of the second rejoining means **(12).** Such a hot solvent line can be used to keep the temperatures of the reactor up during downtime of the system for preparing a feed stream.

In another preferred embodiment of the present invention as depicted in Figure 4, the system further comprises a reactor feed withdrawal line **(15)** fluidly connected to the second heating line **(13)** and or fluidly connected to the first feeding line **(5)** downstream of the second rejoining means **(12).** Preferably, the reactor feed withdrawal line **(15)** is connected to a workup section, preferably a separating system unit, most preferably a flash separating system unit. The flash separating system unit is preferably the flash separating system unit the effluent stream of the reactor **(4)** is fed to.

### Process according to the Invention

Moreover, the most general embodiment of the present invention is also directed to a process for preparing a feed stream for introduction into a solution polymerization reactor using a system according to the present invention, the process comprising the steps of
- providing in a *feed composition step* a composition stream, wherein the composition stream comprises a solvent, a monomer, optionally hydrogen and preferably further comonomer,
- pressurizing in *feed pressurizing step* said composition using the pressurizing unit (1) yielding a pressurized composition stream in the feeding line **(5),**
- heating in a *startup feed heating step* the pressurized composition stream by adjusting the first deviation means **(6)** and the second deviation means **(10)** to allow flow of at least a part of the pressurized composition stream, preferably the total pressurized composition stream, via the first heating line **(11)** through the heating unit **(3)** and via the second heating line **(13)** and the second rejoining device **(12)** to reactor **(4)** until the reactor reached a startup temperature,
- cooling in a *production feed cooling step* the pressurized composition stream by adjusting the first deviation means **(6)** to allow flow of at least a part of the pressurized composition stream, preferably the total pressurized composition stream, via the first cooling line **(7)** through the cooling unit **(2)** and via the second cooling line **(9),** the first rejoining device **(8)** to reactor **(4)** until thereby polymerizing the monomer, preferably together with the comonomer, to yield a polymer.

In the *feed pressurizing step* the composition stream is preferably pressurized to a pressure in the range of from 40 to 250 barg, preferably 45 to 200 barg, and most preferably 50 to 120 barg.

Preferably, in the *startup feed heating step* the startup temperature in the reactor **(4)** is reached by the temperature of the composition stream adjusted in the heating unit **(3)** and/or by reaction of the monomer and preferably comonomer. Usually, polymerization reactions, in particular polymerization reactions of olefins, are highly exothermic.

More preferably, the startup temperature in the reactor is higher than temperature of the composition stream adjusted in the heating unit **(3).** Thus, the heating unit (3) can only be used for a certain extent to heat the reactor. The final increase up to the initial startup temperature must be provided by the polymerization reaction itself.

In the *startup feed heating step,* the pressurized composition feed is preferably heated to a temperature in the range of from 100 to 200 °C, preferably 120 to 180 °C, and most preferably 150 to 170 °C.

Preferably, the *production feed cooling step* is carried out once the startup temperature of the reactor **(4)** has been reached. This has the advantage that overheating is prevented, and normal operation is adjusted. Under normal operation, the reactor feed is led through the cooling unit in the *production feed cooling step* whereby the *startup heating step* has been finished by closing the cycle of the heating unit **(3)** and leading the reactor feed through the by-pass line thereof.

Preferably, the *production feed cooling step* additionally comprises adjusting the second deviation means **(10).**

In the *production feed cooling step,* the pressurized composition feed is preferably cooled to a temperature of below 0 °C, more preferably below -10 °C, even more preferably below -20 °C, still even more preferably in the range of from -25 to -50 °C, and most preferably in the range of from -30 to -40 °C. As indicated above, the high exothermic nature of the polymerization process requires effective cooling of the reaction to control the temperature of the reactor. Hence, the most effective cooling is adding the reactor feed at very low temperatures.

To be most energy efficient, in the *production feed cooling step,* the pressurized composition feed is preferably cooled in a *first deep cooling step* to a temperature in the range of -15 to 10 °C, and in a *second deep cooling step* to a temperature of below 0 °C, more preferably below -10 °C, even more preferably below -20 °C, still even more preferably in the range of from -25 to -50 °C, and most preferably in the range of from -30 to -40 °C.

This efficiency can be even increased in the process prior to the *production feed cooling* step, the pressurized composition feed is cooled in a *pre-cooling step* to a temperature in the range of from 10 to 40 °C.

Once the production feed cooling step has been initiated, preferably once the startup heating step has been fully finished, the monomer and/or comonomer concentration can be further increased. As the reactor feed is now fully cooled by the cooling unit, the reaction can now be carried out in an even more exothermic manner.

The process of the present invention further preferably comprises in case of an immediate shutdown the step of
- adjusting the temperature of the composition stream in a *temperature adjusting step* by adjusting the first deviation means **(6)** and the second deviation means **(10)** to allow flow of a part of the pressurized composition stream via the first cooling line **(7)** through the cooling unit **(2)** and via the second cooling line **(9)** to the first rejoining device **(8)** and to allow flow of a part of the pressurized composition stream via the first heating line **(11)** through the heating unit **(3)** and via the second heating line **(13)** to the second rejoining device **(12)** thereby creating a temperature adjusted pressurized composition feed stream in the feeding line **(5).**

Preferably, during or prior to the *temperature adjusting step,* the feed composition step is modified in a *cold feed withdrawal step* as described in the following in that the composition stream comprises increased amount of solvent. During carrying out of the *temperature adjusting step,* the amount of solvent can be further increased to a final concentration of 99% and higher by said *cold feed withdrawal step.*

In a most preferred embodiment of the process according to the present invention using a system according to Figure 4, the process comprises in case of the need of an immediate shutdown prior, or during to the *temperature adjusting step* the step of
- withdrawing in a *cold feed withdrawal step* cold reactor feed from the feeding line **(5)** via the reactor feed withdrawal line **(15)** until the feeding line between the second rejoining means **(12)** and the cold reactor feed withdrawal line **(15)** comprises no cold reactor feed anymore.

The *cold feed withdrawal step* has the advantage that the process of the present invention can also be used in systems, wherein the second rejoining means **(12)** are farther away from the reactor **(4),** thereby leaving a feeding line with a certain amount of potentially cold reactor feed, which could not be fed to the reactor without risking a temperature drop in the reactor causing fouling or precipitation of the remaining polymer in the reactor.

In a preferred embodiment of the *cold feed withdrawal step the feed withdrawn via* withdrawal line **(15)** can be fed into a workup step, preferably a separating step, most preferably a flash separating step. The flash separating step is preferably the flash separating step the effluent stream of the reactor **(4)** is fed to.

Furthermore, preferably, in a process according to the present invention using a system according to Figure 5, the process comprises in case of the need of an immediate shutdown prior to the *temperature adjusting step* the step of
- introducing in a *reactor temperature maintaining step* hot solvent via the hot solvent feeding line **(14)** into the first feeding line **(5)** and eventually into the reactor **(4)** whereby it is prevented that the reactor temperature is reduced.

### Examples

### Comparative Example CE1

In Comparative Example CE1 a system as known from the prior art according to Figure 1 has been used.

Typically, the reactor feed is pressurized by a high-pressure pump **(1)** from 30 barg to a reactor pressure range of from 45 barg to 90 barg. In CE1, the pressurized reactor feed is directed during start-up of the polymerization process via the by-pass line, thereby not being transported through the deep-coolers **(2a)** and **(2b)** but rather through the heater **(3)** into the reactor **(4).** When the exothermic reaction has started and the heat produced thereby in the reactor becomes sufficiently high, the heater **(3)** is no longer needed in order to maintain the temperature of the reactor **(5)** and is taken out of service by valves **(10)** and **(12)** thereby activating the bypass-line. As a next step the deep-coolers **(2a)** and **(2b)** are taken into service by valves **(6)** and **(8)** thereby deactivating the bypass-line of the deep-coolers.

During regular operation of the polymerization, the reactor feed pump **(1)** is feeding the reactor (4) via the deep-coolers **(2a)** and **(2b)** and via the bypass-line of the heater **(3).**

In a controlled shutdown the procedure as described during start-up is carried out in reverse order ending with only the heater **(3)** being in service, wherein only solvent is fed to the reactor.

In an immediate shutdown situation, the reactor feed pump **(1)** is stopped, and all flows are stopped by interlocking the valves. The feeding line is filled with monomer and/or comonomer. Furthermore, the reactor feed is very cold (down to -20 to -50 °C).

Before the process can be restarted, all monomers and comonomers need to be taken out to create a controlled start-up situation with known compositions in particular for process safety reasons. This cannot be done via the heater **(3)** due to the high risk of a thermo-shock during feeding of the cold material in the feeding line.

Hence, in the systems and processes known from the prior art such as shown in this example, the cold content of the feeding line (and also the content of the deep-coolers and lines thereof) is removed to recovery feed/flare vessels, wherein the monomer is flared off and the liquids are reprocessed via recovery.

This draining requires time, because flashing off the monomer creates cold temperatures, what is restricted by design (process safety). When all monomer is drained off from the reactor feed the system is filled with solvent and can be restarted with only solvent via the heater **(3)** as described above.

### Inventive Example IE1

In Inventive Example IE1 a system as according to the present invention as depicted in Figure 3 has been used. In this system, two deep-coolers **(2a)** and **(2b)** are used and the layout of the feeding line, cooling section cycle, and heating section cycle is according to the present invention. Furthermore, the second rejoining means **(12)** are positioned very close to the reactor inlet on the feeding line **(5).** Hence, the feeding line **(5)** between the second rejoining means **(12)** and the reactor inlet is short.

The reactor feed is pressurized to a reactor pressure in the range of from 45 barg to 120 barg. In IE1, the pressurized reactor feed is directed during start-up of the polymerization process via the by-pass line, thereby not being transported through the deep-coolers **(2a)** and **(2b)** but rather through the heater **(3)** into the reactor **(4).** When the exothermic reaction has started and the heat produced thereby in the reactor becomes sufficiently high, the heater **(3)** is no longer needed in order to maintain the temperature of the reactor **(4)** and is taken out of service by valves **(10)** and **(12)** thereby activating the bypass-line. As a next step the deep-coolers **(2a)** and **(2b)** are taken into service by valves **(6)** and **(8)** thereby closing the bypass-line of the deep-coolers.

During regular operation of the polymerization, the reactor feed pump **(1)** is feeding the reactor 4) via the deep-coolers **(2a)** and **(2b)** and via the bypass-line of the heater **(3).**

In a controlled shutdown the procedure as described during start-up is carried out in reverse order ending with only the heater **(3)** being in service, wherein only solvent is fed to the reactor.

In an immediate shutdown situation, the reactor feed pump **(1)** is stopped, and all flows are stopped by interlocking the valves. The feeding line is filled with monomer. Furthermore, the reactor feed is very cold (down to -60 °C).

Before the process can be restarted, all monomers and comonomers need to be taken out to create a controlled start-up situation with known compositions in particular for process safety reasons.

In the setup of Figure 3, the rejoining means **(12)** of the heater **(3)** are located close to the reactor inlet. This ensures that only very low amounts of cold content in the feeding line downstream of the rejoining means **(12)** are fed to the reactor reducing the risk of temperature drop in the reactor. Preferably, the temperature in the reactor should stay above 130 °C to prevent solidification of remaining polymer.

To achieve such behavior, the reactor feed pump **(1)** is restarted at low flow via the by-pass line of the deep-coolers **(2a)** and **(2b)** and via the heater **(3)** to the reactor **(4).** Moreover, the flow from the feed pump **(1)** enters the heater **(3)** via the second deviation means **(10)** upstream of the first rejoining means **(8),** which prevents a thermal shock in the heater **(3),** and so is inherently a safer design. Thereby, the cold content in the feeding line is heated up by the heater **(3).** Usually, the lines from the start-up heater **(3)** are at a temperature of about 150 °C. The reactor feed, which is still present in the deep-cooling unit **(2a)** and **(2b),** can be slowly mixed in the line and finally be flushed in while keeping the reactor temperature above 130 °C. As the feeding line **(5)** after the second rejoining means **(12)** is short, the cool reactor feed therein can simply be supplied to the reactor **(4).** The small amount of cold reactor feed in the short feeding line **(5)** will not lead to a significant temperature drop in the reactor **(4).**

Optionally, the streams withdrawn from the reactor **(4)** can be heated further in a flash heater and fed to a flash separator downstream of the outlet of the reactor **(4),** where the contents of such a withdrawn stream can be separated (not shown in the Figures).

In this way the reactor feed section can be prepared for a new start-up attempt without flaring off any monomer. The monomer set free in the process can be vented out via the vent gas in a controlled way instead of flaring. In this way, the monomer still can be used for steam production and can prevent air emissions from the flaring.

### Inventive Example IE2

In Inventive Example IE2 a system as according to the present invention as depicted in Figure 4 has been used. The system of Figure 4 differs from the system of Figure 3 in that the distance between the inlet of the reactor **(4)** and the second rejoining means **(12)** is larger. Furthermore, a reactor feed withdrawal line **(15)** is connected to the feeding line **(5)** downstream of the second rejoining means **(12).**

The reactor feed is pressurized to a reactor pressure in the range of from 45 barg to 120 barg. In IE1, the pressurized reactor feed is directed during start-up of the polymerization process via the by-pass line, thereby not being transported through the deep-coolers **(2a)** and **(2b)** but rather through the heater **(3)** into the reactor **(4).** When the exothermic reaction has started and the heat produced thereby in the reactor becomes sufficiently high, the heater **(3)** is no longer needed in order to maintain the temperature of the reactor **(5)** and is taken out of service by valves **(10)** and **(12)** thereby activating the bypass-line. As a next step the deep-coolers **(2a)** and **(2b)** are taken into service by valves **(6)** and **(8)** thereby closing the bypass-line of the deep-coolers.

During regular operation of the polymerization, the reactor feed pump **(1)** is feeding the reactor **(5)** via the deep-coolers **(2a)** and **(2b)** and via the bypass-line of the heater **(3).**

In a controlled shutdown the procedure as described during start-up is carried out in reverse order ending with only the heater **(3)** being in service, wherein only solvent is fed to the reactor.

In an immediate shutdown situation, the reactor feed pump **(1)** is stopped, and all flows are stopped by interlocking the valves. The feeding line is filled with monomer. Furthermore, the reactor feed is very cold (down to -60 °C).

Before the process can be restarted, all monomers and comonomers need to be taken out to create a controlled start-up situation with known compositions in particular for process safety reasons.

In the setup of Figure 4, it the rejoining means **(12)** of the heater **(3)** are located farther away from the reactor inlet. Hence, in such a setup the risk of a solidification of remaining polymer in case of feeding the cool reactor feed from this part of the feeding line **(5)** to the reactor cannot be neglected. Thus, in IE3 it needs to be ensured that the temperature in the reactor stays above 130 °C to prevent said solidification of polymer.

To achieve such behavior, the inlet of the reactor **(4)** is closed, and the reactor feed withdrawal line **(15)** is fluidly connected to a flash separating system unit located downstream of the outlet of the reactor **(4).** The reactor feed pump **(1)** is restarted at low flow via the by-pass line of the deep-coolers **(2a)** and **(2b)** and via the heater **(3)** to the reactor **(4).** Thereby, the cold content in the feeding line is heated up by the heater **(3)** and the reactor feed in the feeding line between the second rejoining means **(12)** and the connection to the reactor feed withdrawal line **(15)** are removed via the reactor feed withdrawal line **(15).** When the temperature of the cold reactor feed has been increased (i.e. more than 150 °C) the cold temperatures in the feeding line downstream of the second rejoining means **(12)** are eliminated. Subsequently, the reactor withdrawal line **(15)** will be closed and the inlet to the reactor will be opened. The reactor feed, which is still present in the deep-cooling unit **(2a)** and **(2b),** can be slowly mixed in the feeding line and finally be flushed in while keeping the reactor temperature above 130 °C.

Optionally, the streams withdrawn from the reactor can be heated further in a flash heater and fed to the flash separator, where the contents can be separated (not shown in the Figures).

In this way the reactor feed section can be prepared for a new start-up attempt without flaring off any monomer. The monomer set free in the process can be vented out via the vent gas in a controlled way instead of flaring. In this way, the monomer still can be used for steam production and can prevent air emissions from the flaring.

### Inventive Example IE3

In Inventive Example IE3 a system as according to the present invention as depicted in Figure 8 has been used. The system of Figure 8 differs from the system of Figure 3 in that the first deviation means **(6)** and the second deviation means **(10)** are identical and the first rejoining means **(8)** and the second rejoining means **(12)** are also identical. Furthermore, the feeding line is interrupted between the first/second deviation means and the first/second rejoining means. Hence, the system has no dedicated by-pass line. Instead, the cooling unit forms the by-pass line for the heating unit and *vice versa.*

The reactor feed is pressurized to a reactor pressure in the range of from 45 barg to 120 barg. The pressurized reactor feed is directed during start-up of the polymerization process via the heater **(3)** into the reactor **(4).** When the exothermic reaction has started and the heat produced thereby in the reactor becomes sufficiently high, the heater **(3)** is no longer needed in order to maintain the temperature of the reactor **(4)** and is slowly taken out of service by valves **(6/10)** and **(8/12)** thereby activating the cooling section. As a next step the deep-coolers **(2a)** and **(2b)** are taken solely into service.

During regular operation of the polymerization, the reactor feed pump (1) is feeding the reactor **(4)** via the deep-coolers **(2a)** and **(2b)** only.

In a controlled shutdown the procedure as described during start-up is carried out in reverse order ending with only the heater **(3)** being in service, wherein only solvent is fed to the reactor.

In an immediate shutdown situation, the reactor feed pump (1) is stopped, and all flows are stopped by interlocking the valves. The feeding line is filled with monomer. Furthermore, the reactor feed is very cold (down to -60 °C).

Before the process can be restarted, all monomers and comonomers need to be taken out to create a controlled start-up situation with known compositions in particular for process safety reasons.

Depending on the distance between the first/second rejoining means **(8/12)** and the inlet of the reactor, the principles as described in Inventive Examples IE1 or IE2 can be applied with the exception that a by-pass line is used. Instead, the mixing between the cooled stream from the cooling unit **(2)** and the hot stream from the heating unit **(3)** occurs directly at the first/second rejoining means **(8/12).**

## Claims

1. System for preparing a feed stream for introduction into a solution polymerization reactor, the system comprising
- a pressurizing unit **(1)** comprising an outlet,
- a cooling unit **(2)** comprising an inlet and an outlet,
- a heating unit **(3)** comprising an inlet and an outlet,
- the solution polymerization reactor **(4)** comprising an inlet,
- a first feeding line **(5)** fluidly connecting the outlet of the pressurizing unit **(1)** with the inlet of the solution polymerization reactor **(4),**
- a first deviation means **(6)** fluidly connecting the first feeding line **(5)** with a first cooling line **(7),**
- a first rejoining means **(8)** fluidly connecting a second cooling line **(9)** with the first feeding line **(5),**
- a second deviation means **(10)** fluidly connecting the first feeding line **(5)** with a first heating line **(11),** and
- a second rejoining means **(12)** fluidly connecting a second heating line **(13)** with the first feeding line **(5),**
wherein the first cooling line **(7)** is fluidly connected with the inlet of the cooling unit **(2),**
wherein the second cooling line **(9)** is fluidly connected with the outlet of the cooling unit **(2),**
wherein the first heating line **(11)** is fluidly connected with the inlet of the heating unit **(3),**
wherein the second heating line **(13)** is fluidly connected with the outlet of the heating unit **(3),** and
wherein the first rejoining means **(8)** is positioned in the feeding line **(5)** downstream of the second deviation means **(10).**

2. The system according to claim 1, wherein the cooling unit **(2)** comprises at least two cooling devices.

3. The system according to claim 2, wherein the cooling unit **(2)** comprises
- a first cooling device **(2a)** comprising an inlet and an outlet, and
- a second cooling device **(2b)** comprising an inlet and an outlet,
wherein the outlet of the first cooling device **(2a)** is fluidly connected to the inlet of the second cooling device **(2b),**
wherein the inlet of the first cooling device **(2a)** is the inlet of the cooling unit **(2),** and
wherein the outlet of the second cooling device **(2b)** is the outlet of the cooling unit **(2).**

4. The system according to any of the preceding claims 1 to 3, wherein the system further comprises a third cooling device **(19)** downstream of the pressurizing unit (1) and upstream of the first deviation means **(6).**

5. The system according to any of the preceding claims 1 to 4, wherein the pressurizing unit **(1)** is a pump, preferably a reactor feed pump.

6. The system according to any of the preceding claims 1 to 5, wherein the first deviation means **(6)** is positioned in the first feeding line **(5)** at the same position as the second deviation means **(10)** and/or the first rejoining means **(8)** is positioned in the first feeding line **(5)** at the same position as the second rejoining means **(12).**

7. The system according to claim 6, wherein the first feeding line **(5)** is interrupted between the position of the first deviation means **(6)** or the second deviation means **(10)** and the position of the first rejoining means **(8)** or the second rejoining means **(12).**

8. The system according to any of the preceding claims 1 to 7, wherein the system comprises a reactor feed withdrawal line **(15)** fluidly connected to the first feeding line **(5)** downstream of the second rejoining means **(12).**

9. A process for preparing a feed stream for introduction into a solution polymerization reactor using a system according to any of the preceding claims 1 to 8, the process comprising the steps of
- providing in a *feed composition step* a composition stream, wherein the composition stream comprises a solvent, a monomer, optionally hydrogen and preferably further comonomer,
- pressurizing in a *feed pressurizing step* said composition stream using the pressurizing unit **(1)** yielding a pressurized composition stream in the first feeding line **(5),**
- heating in a *startup feed heating step* the pressurized composition stream by adjusting the first deviation means **(6)** and the second deviation means **(10)** to allow flow of at least a part of the pressurized composition stream, preferably the total pressurized composition stream, via the first heating line **(11)** through the heating unit **(3)** and via the second heating line **(13)** and the second rejoining device **(12)** to the solution polymerization reactor **(4)** until the reactor reached a startup temperature,
- cooling in a *production feed cooling step* the pressurized composition stream by adjusting the first deviation means **(6)** to allow flow of at least a part of the pressurized composition stream, preferably the total pressurized composition stream, via the first cooling line **(7)** through the cooling unit **(2)** and via the second cooling line **(9),** the first rejoining device **(8)** to the solution polymerization reactor **(4)** until thereby polymerizing the monomer, preferably together with the comonomer, to yield a polymer.

10. The process according to claim 9, wherein in the *startup feed heating step* the startup temperature in the solution polymerization reactor **(4)** is reached by the temperature of the composition stream adjusted in the heating unit **(3)** and/or by reaction of the monomer and preferably comonomer.

11. The process according to claim 10, wherein the startup temperature in the solution polymerization reactor **(4)** is higher than the temperature of the composition stream adjusted in the heating unit **(3).**

12. The process according to any of the preceding claims 9 to 11, wherein the *production feed cooling step* is carried out once the startup temperature of the solution polymerization reactor **(4)** has been reached and/or the *startup feed heating step* has been finished.

13. The process according to any of the preceding claims 9 to 12, wherein the process further comprises in case of an immediate shutdown the step of
- adjusting the temperature of the composition stream in a *temperature adjusting step* by adjusting the first deviation means **(6)** and the second deviation means **(10)** to allow flow of a part of the pressurized composition stream via the first cooling line **(7)** through the cooling unit **(2)** and via the second cooling line **(9),** the first rejoining device **(8)** and to allow flow of a part of the pressurized composition stream via the first heating line **(11)** through the heating unit **(3)** and via the second heating line **(13),** the second rejoining device **(12)** thereby creating a temperature adjusted pressurized composition feed stream in the first feeding line (5).

14. The process according to claim 13, wherein prior to the *production feed cooling* step, the pressurized composition feed is cooled in a *pre-cooling step* to a temperature in the range of from 10 to 40 °C.

15. The process according to any of the preceding claims 9 to 14 using a system according to claim 8, wherein the process comprises in case of the need of an immediate shutdown prior to the *temperature adjusting step* the step of
- withdrawing in a *cold feed withdrawal step* cold reactor feed from the first feeding line **(5)** via the reactor feed withdrawal line **(15)** until the first feeding line **(5)** between the second rejoining means **(12)** and the cold reactor feed withdrawal line **(15)** comprises no cold reactor feed anymore, wherein the feed withdrawn via withdrawal line **(15)** is preferably fed into a workup step, more preferably into a separating step, even more preferably into a flash separating step, and most preferably into the flash separating step the effluent stream of the reactor **(4)** is fed to.
